(19) **Europäisches Patentamt / European Patent Office / Office européen des brevets**

(11) **EP 4 759 983 A1**

(12) # EUROPEAN PATENT APPLICATION
published in accordance with Art. 153(4) EPC

(43) Date of publication:
17.06.2026 Bulletin 2026/25

(21) Application number: 24894496.9

(22) Date of filing: 12.11.2024

(51) International Patent Classification (IPC):
*D06F 34/18* (2020.01)   *D06F 34/05* (2020.01)
*D06F 34/28* (2020.01)   *G06N 20/10* (2019.01)
*D06F 34/04* (2020.01)   *D06F 103/44* (2020.01)
*D06F 103/04* (2020.01)   *D06F 105/56* (2020.01)
*D06F 105/58* (2020.01)   *D06F 103/46* (2020.01)

(52) Cooperative Patent Classification (CPC):
**D06F 34/04; D06F 34/05; D06F 34/18; D06F 34/28; G06N 20/10;** D06F 2103/04; D06F 2103/44; D06F 2103/46; D06F 2105/56; D06F 2105/58

(86) International application number:
PCT/KR2024/017861

(87) International publication number:
WO 2025/110603 (30.05.2025 Gazette 2025/22)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 24.11.2023   KR 20230165527
21.12.2023   KR 20230187837

(71) Applicant: Samsung Electronics Co., Ltd.
Suwon-si, Gyeonggi-do 16677 (KR)

(72) Inventors:
• **KIM, Jeehoon**
Suwon-si Gyeonggi-do 16677 (KR)
• **CHO, Byeonghwa**
Suwon-si Gyeonggi-do 16677 (KR)
• **HONG, Jongsoo**
Suwon-si Gyeonggi-do 16677 (KR)
• **KIM, Chunseong**
Suwon-si Gyeonggi-do 16677 (KR)

(74) Representative: **Gulde & Partner Patent- und Rechtsanwaltskanzlei mbB Berliner Freiheit 2 10785 Berlin (DE)**

(54) **ELECTRONIC DEVICE FOR ESTIMATING WEIGHT OF LAUNDRY AND METHOD FOR OPERATING SAME**

(57)    A method for operating an electronic device is disclosed. The method for operating an electronic device according to an embodiment of the present disclosure comprises the operations of; measuring the electric current of a motor of the electronic device with regard to a predetermined time interval in response to identifying that a washing or drying cycle regarding laundry is initiated; determining that the weight of the laundry is at a first level or a second level on the basis of the motor's electric current value regarding the predetermined time interval and the degree of change in the electric current; determining the weight of the laundry by using the motor's electric current value as an input value to a machine learning model which is trained to predict the weight of laundry on the basis of the current profile information in response to determining that the weight of the laundry is at the first level; determining the weight of the laundry by using at least two from among the maximum electric current value measured in the predetermined time interval, the cumulative differential value of the electric current measured in the predetermined time interval, the motor's reference electric current value, information regarding the amount of change in the motor's electric current, and the motor's electric current value as input values to the machine learning model in response to determining that the weight of the laundry is at the second level; determining the time required for the washing or drying cycle to be completed on the basis of the determined weight of the laundry; and displaying the determined time.

# FIG.4

```
                          ┌─────────────┐
                          │    START    │
                          └──────┬──────┘
                                 │
                                 ▼
┌────────────────────────────────────────────────────────┐
│   MEASURE CURRENT OF MOTOR OF ELECTRONIC DEVICE FOR     │
│  PREDETERMINED TIME PERIOD IN RESPONSE TO  IDENTIFYING  │──410
│   THAT WASHING OR DRYING CYCLE FOR LAUNDRY IS INITIATED  │
└────────────────────────────────┬───────────────────────┘
                                 │
                                 ▼
┌────────────────────────────────────────────────────────┐
│   DETERMINE DEGREE OF WEIGHT OF LAUNDRY AS ONE OF FIRST  │
│  LEVEL OR SECOND LEVEL BASED ON CURRENT VALUE OF MOTOR AND│──420
│  DEGREE OF CHANGE IN CURRENT FOR PREDETERMINED TIME PERIOD│
└────────────────────────────────┬───────────────────────┘
                                 │
                                 ▼
┌────────────────────────────────────────────────────────┐
│  DETERMINE WEIGHT OF LAUNDRY USING MACHINE LEARNING MODEL │
│     TRAINED TO PREDICT WEIGHT OF LAUNDRY BASED ON        │──430
│          DATA REGARDING MEASURED CURRENT                 │
└────────────────────────────────┬───────────────────────┘
                                 │
                                 ▼
┌────────────────────────────────────────────────────────┐
│     DETERMINE TIME REQUIRED TO COMPLETE WASHING OR       │
│    DRYING CYCLE BASED ON DETERMINED WEIGHT OF LAUNDRY    │──440
└────────────────────────────────┬───────────────────────┘
                                 │
                                 ▼
┌────────────────────────────────────────────────────────┐
│              DISPLAY DETERMINED TIME                     │──450
└────────────────────────────────┬───────────────────────┘
                                 │
                                 ▼
                          ┌─────────────┐
                          │     END     │
                          └─────────────┘
```

Description

[Technical Field]

The disclosure relates to an electronic device for estimating the weight of laundry and a method for operating the same.

[Background Art]

With the development of technologies related to home appliances, an electronic device for performing washing or drying may provide various functions (e.g., remote control through a user device, optimization of a washing cycle and method, diagnosis and maintenance, and automatic notification). In this regard, an electronic device for washing and drying may provide a function of notifying the user of the progress and expected complete time of the washing or drying cycle. The washing or drying device may estimate the time at which the cycle ends based on the weight of the laundry to be put in. In order to measure the weight of the laundry, a sensor for measuring the weight may be used, or the weight may be measured by measuring the load on the motor of the device.

The above information is presented as background information only to assist with an understanding of the disclosure. No determination has been made, and no assertion is made, as to whether any of the above might be applicable as prior art with regard to the disclosure.

[Disclosure]

[Technical Problem]

The washing or drying device may measure the weight of the laundry by measuring the current for the weight sensor or the motor. When the weight sensor is used, it may be difficult to accurately measure the weight of the laundry because the weight of the drum is relatively large compared to the amount of laundry. Further, the method of measuring the weight of the laundry by measuring the current of the motor may suffer from reduced accuracy when a high weight of laundry is put in or when the weight eccentricity of the drum is significant due to humidity imbalance.

Aspects of the disclosure are to address at least the above-mentioned problems and/or disadvantages and to provide at least the advantages described below. Accordingly, an aspect of the disclosure is to provide a device and method for measuring the weight of laundry based on a current profile of a motor.

Additional aspects will be set forth in part in the description which follows and, in part, will be apparent from the description, or may be learned by practice of the presented embodiments.

[Technical Solution]

In accordance with an aspect of the disclosure, a method performed by an electronic device for washing or drying is provided. The method includes measuring, by the electronic device, a current of a motor of the electronic device for a predetermined time period in response to identifying that a washing or drying cycle for laundry is initiated. The method for operating the electronic device may comprise determining a weight of the laundry as one of a first level or a second level based on a current value of the motor and a degree of change in the current for the predetermined time period. The method for operating the electronic device may comprise determining the weight of the laundry using the current value of the motor as an input value to a machine learning model trained to predict the weight of the laundry based on current profile information in response to determining the weight of the laundry as the first level. The method for operating the electronic device may comprise determining the weight of the laundry using at least two of a maximum current value measured in the predetermined time period, a differential accumulated value of the current measured in the predetermined time period, a reference current value of the motor, information about an amount of the change in the current of the motor, or the current value of the motor as input values to the machine learning model, in response to determining the weight of the laundry as the second level. The method for operating the electronic device may comprise determining a time required to complete the washing or drying cycle, based on the determined weight of the laundry. The method for operating the electronic device may comprise displaying the determined time.

In accordance with another aspect of the disclosure, an electronic device is provided. The electronic device includes memory storing one or more computer programs and one or more processors communicatively coupled to the memory ,wherein the one or more computer programs include computer-executable instructions that, when executed by the one or more processors individually or collectively, cause the electronic device to measure a current of a motor of the electronic device for a predetermined time period in response to identifying that a washing or drying cycle for laundry is initiated, determine a weight of the laundry as one of a first level or a second level based on a current value of the motor and a degree of change in the current for the predetermined time period, determine the weight of the laundry using the current value of the motor as an input value to a machine learning model trained to predict the weight of the laundry based on current profile information in response to determining the weight of the laundry as the first level, determine the weight of the laundry using at least two of a maximum current value measured in the predetermined time period, a differential accumulated value of the current measured in the predetermined time period, a reference current value of the motor, information about an amount of the change in the current of the motor, or the current value of the motor as input values to the machine learning model, in response to determining the weight of the laundry as the second level, determine a time required to complete the washing or drying cycle, based on the determined weight of the laundry, and display the determined time.

In accordance with another aspect of the disclosure, one or more non-transitory computer-readable storage media storing one or more computer programs including computer-executable instructions that, when executed by one or more processors of an electronic device individually or collectively, cause the electronic device to perform operations are provided. The operations include measuring, by the electronic device, a current of a motor of the electronic device for a predetermined time period in response to identifying that a washing or drying cycle for laundry is initiated, determining, by the electronic device, a weight of the laundry as one of a first level or a second level based on a current value of the motor and a degree of change in the current for the predetermined time period, determining, by the electronic device, the weight of the laundry using the current value of the motor as an input value to a machine learning model trained to predict the weight of the laundry based on current profile information in response to determining the weight of the laundry as the first level, determining, by the electronic device, the weight of the laundry using at least two of a maximum current value measured in the predetermined time period, a differential accumulated value of the current measured in the predetermined time period, a reference current value of the motor, information about an amount of the change in the current of the motor, or the current value of the motor as input values to the machine learning model, in response to determining the weight of the laundry as the second level, determining, by the electronic device, a time required to complete the washing or drying cycle, based on the determined weight of the laundry, and displaying, by the electronic device, the determined time.

[Advantageous Effects]

Embodiments of the disclosure accurately measure the weight of laundry or an object to be dried.

Embodiment of the disclosure enhance user convenience by accurately predicting the time required for washing or drying and providing it to the user.

Other aspects, advantages, and salient features of the disclosure will become apparent to those skilled in the art from the following detailed description, which, taken in conjunction with the annexed drawings, discloses various embodiments of the disclosure.

[Description of Drawings]

FIG. 1 is a perspective view illustrating an exterior of a washer according to an embodiment;
FIG. 2 is a side cross-sectional view illustrating a washer according to an embodiment;
FIG. 3 is a functional block diagram schematically illustrating a configuration of a washer in terms of functions and controls according to an embodiment;
FIG. 4 is a flowchart illustrating an operation of a device for performing washing or drying according to an embodiment;
FIG. 5 illustrates an operation flow of an electronic device according to an embodiment;
FIG. 6 illustrates an example of a current measured according to a washing or drying cycle according to an embodiment;
FIG. 7 illustrates a weight measurement result of an electronic device according to an embodiment; and
FIG. 8 illustrates an example of an internet of things (IoT) environment including an electronic device according to an embodiment.

The same reference numerals are used to represent the same elements throughout the drawings.

[Mode for Invention]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, the term 'and/or' should be understood as encompassing any and all possible combinations by one or more of the enumerated items. As used herein, such terms as "1st" and "2nd," or "first" and "second" may be used to simply distinguish a corresponding component from another, and does not limit the components in other aspect (e.g., importance or order).

When a (e.g., first) component is mentioned as "coupled to," "connected to," "supported by," or "contacting" another (e.g., second) component with or without the terms "functionally" or "communicatively," the component may be directly or indirectly coupled to, connected to, supported by, or contact the other component.

It will be further understood that the terms "comprise" and/or "have," as used herein, specify the presence of stated features, integers, steps, operations, elements, and/or components, but do not preclude the presence or addition of one or more other features, integers, steps, operations, elements, components, and/or groups thereof. Throughout the specification, when one component is positioned "on" another component, the first component may be positioned directly on the second component, or other component(s) may be positioned between the first and second component.

As used herein, the terms "configured to" may be interchangeably used with the terms "suitable for," "having the capacity to," "designed to," "adapted to," "made to," or "capable of" depending on circumstances. The term "configured to" does not essentially mean "specifically designed in hardware to." Rather, the term "configured to" may mean that a device can perform an operation together with another device or parts. For example, a 'device configured (or set) to perform A, B, and C' is a dedicated device to perform the corresponding operation or may mean a general-purpose device capable of various operations including the corresponding operation.

The terms "upper side", "lower side", and "front and rear directions" used in the disclosure are defined with respect to the drawings, and the shape and position of each component are not limited by these terms.

In the disclosure, the above-described description has been made mainly of specific embodiments, but the disclosure is not limited to such specific embodiments, but should rather be appreciated as covering all various modifications, equivalents, and/or substitutes of various embodiments. With regard to the description of the drawings, similar reference numerals may be used to refer to similar or related elements.

The washer according to various embodiments of the disclosure may be an example of a clothing treatment device. The washer according to various embodiments may include a top-loading washer in which an opening for inserting or withdrawing laundry faces upward, or a front-loading washer in which an opening for inserting or withdrawing laundry faces forward. The top loading washer may wash laundry using a water flow generated by a rotating body such as a pulsator. The front loading washer may wash laundry by repeatedly raising and dropping the laundry by rotating the drum. The front-loading washer may include a lift for raising laundry. The washer according to various embodiments may include a washer having various loading and washing schemes other than the top-loading and front-loading washers described above. In the disclosure, a case of a front-loading washer is mainly described, but the disclosure is not limited thereto.

Hereinafter, the washer is described in detail with reference to the drawings.

It should be appreciated that the blocks in each flowchart and combinations of the flowcharts may be performed by one or more computer programs which include instructions. The entirety of the one or more computer programs may be stored in a single memory device or the one or more computer programs may be divided with different portions stored in different multiple memory devices.

Any of the functions or operations described herein can be processed by one processor or a combination of processors. The one processor or the combination of processors is circuitry performing processing and includes circuitry like an application processor (AP, e.g. a central processing unit (CPU)), a communication processor (CP, e.g., a modem), a graphics processing unit (GPU), a neural processing unit (NPU) (e.g., an artificial intelligence (AI) chip), a Wi-Fi chip, a Bluetooth® chip, a global positioning system (GPS) chip, a near field communication (NFC) chip, connectivity chips, a sensor controller, a touch controller, a finger-print sensor controller, a display driver integrated circuit (IC), an audio CODEC chip, a universal serial bus (USB) controller, a camera controller, an image processing IC, a microprocessor unit (MPU), a system on chip (SoC), an IC, or the like.

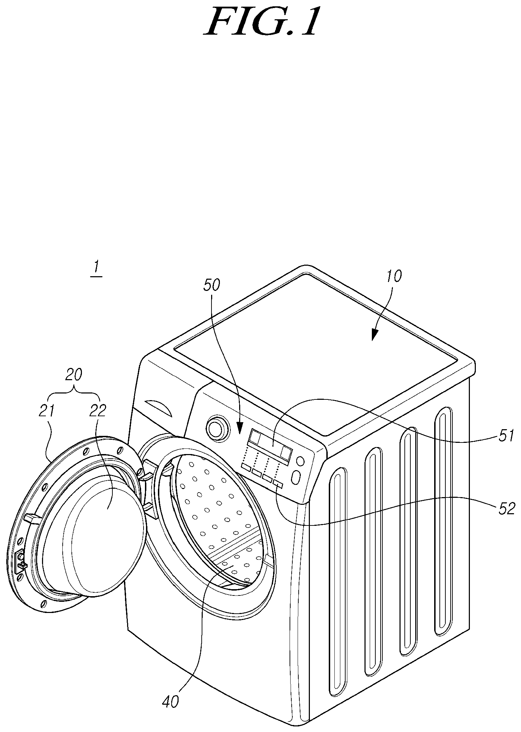

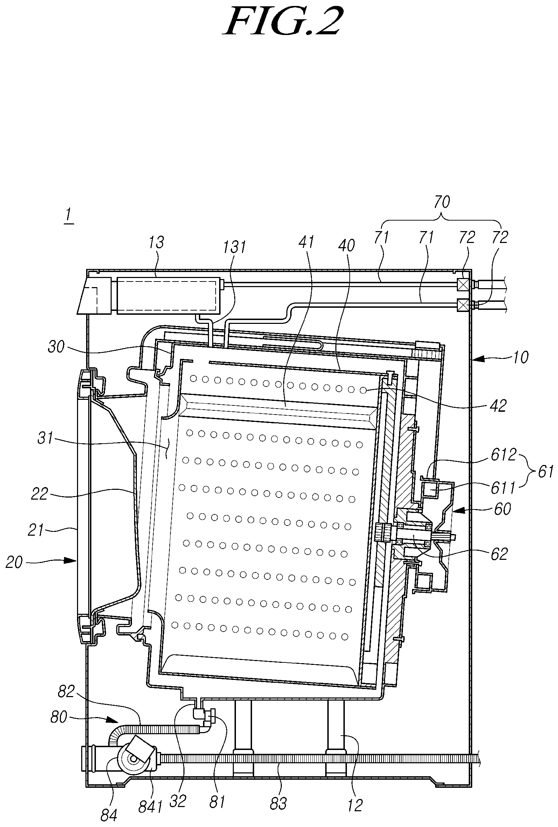

FIG. 1 is a perspective view illustrating the exterior of a washer according to an embodiment. FIG. 2 is a side cross-sectional view illustrating a washer according to an embodiment.

Referring to FIGS. 1 and 2, the washer 1 may include a housing 10 for receiving various components therein. The housing 10 may have an overall hexahedral shape. The housing 10 may include an opening formed in one surface thereof. Two or more of the surfaces of the housing 10 may be integrally formed. Each surface of the housing 10 may be separately manufactured and assembled. The housing 10 may be, e.g., press-molded with an iron plate material or injection-molded with a resin material.

In an example, a door 20 for opening and closing the corresponding opening may be provided in a portion corresponding to the opening of the housing 10. The door 20 may be rotatably coupled to a hinge fixed to one surface of the housing 10. For example, at least a portion of the door 20 is provided to be transparent or translucent so as to be visible inside. The user may open and close the door 20 to put the laundry into the drum 40 positioned inside the housing 10 or withdraw the laundry from the drum 40. For example, the door 20 is locked by a locking device (not shown) so as not to be opened while the washer 1 is running. In an example, the door 20 may include a door frame 21 and a glass member 22. The glass member 22 may be formed of, e.g., a transparent tempered glass material to see through the inside of the housing 10, but the disclosure is not limited thereto.

In an example, the washer 1 may include a tub 30 fixedly disposed inside the housing 10. The tub 30 may have a substantially cylindrical shape with one side open. A tub opening 31 may be provided in the front surface of the tub 30 at a position corresponding to the opening of the housing 10. The tub 30 may store washing water. A drain port 32 for draining washing water may be provided under the tub 30. The drain port 32 may be connected to, e.g., the drain device 80.

In an example, the washer 1 may include a damper 12. The damper 12 may be provided to connect the housing 10 and the tub 30. One side of the damper 12 may be fixed to the inner surface of the housing 10 and the other side of the damper 12 may be fixed to the tub 30. The damper 12 may be provided to attenuate vibration by absorbing vibration energy transferred to the tub 30 and/or the housing 10 when the drum 40 rotates.

In an example, the washer 1 may include a drum 40 provided inside the tub 30. The drum 40 may have a substantially cylindrical shape with one side open. A front plate 43 and a rear plate 44 may be disposed on the front surface and the rear surface, respectively, of the drum 40. The front plate 43 may be provided with a drum opening at a position corresponding to the opening of the housing 10 and the tub opening 31 of the tub 30. The drum 40 may receive laundry. The drum 40 may receive rotational power from the driving device 60 and rotate inside the tub 30. The drum 40 may perform washing, rinsing, and/or spinning while rotating inside the tub 30.

In an example, the drum 40 may include a lifter 41 and/or a plurality of through holes 42. For example, the lifter 41 lifts the laundry while the drum 40 rotates so that the laundry repeatedly rises and falls, thereby evenly washing laundry on several surfaces thereof. The through hole 42 may be, e.g., a passage formed so that the washing water received in the tub 30 flows into the drum 40 or the washing water inside the drum 40 is discharged to the outside. In an example, the lifter 41 or the through hole 42 may be omitted.

In an example, the washer 1 may include a control panel 50 that supports interaction between the user and the washer 1. In an example, the control panel 50 may be disposed at an upper end of the front surface of the housing 10 as illustrated in FIG. 1, but the disclosure is not limited thereto. In an example, the control panel 50 may include an input unit 51 and a display unit 52.

The input unit 51 may include, e.g., any type of user input means for obtaining a user input for controlling the washer 1. The user may input power on/off, washing setting information (e.g., operation start/stop, course selection, time selection, etc.) of the washer 1 through the input unit 51. For example, the input unit 51 is a tact switch, a push switch, a slide switch, a toggle switch, a micro switch, or a touch switch, but the disclosure is not limited thereto. For example, the input unit 51 is in the form of a jog shuttle that the user may grip and rotate. In an example, the input unit 51 may include an infrared sensor. The user may remotely input the setting information through the remote control, and the input setting information may be received by the input unit 51 as an infrared signal. In an example, the input unit 51 may include a microphone. Setting information by the user's voice may be obtained through a microphone.

The display unit 52 may display various washing setting information and/or operation state information about the washer 1 input from the user. The display unit 52 may include various types of display panels such as a liquid crystal display (LCD), a light emitting diode (LED), an organic LED (OLED), a quantum dot LED (QLED), and a micro LED. For example, the display unit 52 is implemented as a touch screen with a touch pad provided on the front surface thereof, but the disclosure is not limited to a specific type of display means. In an example, the display unit 52 may include any type of audio means including a speaker, and may represent each of the above-described information as an auditory signal through the audio means. In an example, the display unit 52 may operate to audibly provide the user with information for guiding the user's input and/or information related to the ongoing process.

In an example, the washer 1 may include a driving device 60 for rotating the drum 40. The driving device 60 may include a motor 61 and a driving shaft 62 for transferring the driving force generated by the motor 61 to the drum 40. The motor 61 may include a fixed stator 611 and a rotor 612 that rotates by electromagnetically interacting with the stator 611 to convert an electric force into a mechanical rotational force. The rotational force generated by the motor 61 may be transferred to the drum 40 through the driving shaft 62. The driving shaft 62 may be press-fitted into the rotor 612 of the motor 61 to rotate together with the rotor 612. The driving shaft 62 may, e.g., partially penetrate the rear wall of the tub 30 to connect the drum 40 and the motor 61. The driving device 60 may rotate the drum 40 forward or backward to perform washing, rinsing, and/or spinning operations.

In an example, the washer 1 may include a water supply device 70 for supplying washing water to the drum 40 and/or the tub 30. The water supply device 70 may include at least one water supply pipe 71 and at least one water supply valve 72. The at least one water supply pipe 71 may be provided to supply washing water into the tub 30 using an external water supply source. One of the at least one water supply pipe 71 may be connected to a detergent supply device 13 provided in the housing 10. Here, the detergent supply device 13 may be divided into a plurality of spaces, and each space may be provided with a detergent, a rinsing agent, or the like. The washing water passing through the detergent supply device 13 may be supplied to the tub 30 together with the detergent (or rinsing agent) through the detergent supply pipe 131. Another one of the at least one water supply pipe 71 may be directly connected to the tub 30. For example, the washing water supplied through the water supply pipe 71 directly connected to the tub 30 is directly supplied to the tub 30 without going through an intermediate component such as the detergent supply device 13.

In an example, the washer 1 may include a drain device 80 for draining the washing water received in the drum 40 and/or the tub 30. The drain device 80 may include a drain valve 81, a first drain pipe 82, a second drain pipe 83, or a pump chamber 84. The drain device 80 may be disposed, e.g., under the tub 30 to discharge the washing water discharged from the tub 30 to the outside of the washer 1.

In an example, the drain valve 81 may be provided to open and close the drain port 32. When the drain valve 81 is opened, the washing water received in the tub 30 may flow through the drain port 32 to the drain device 80.

In an example, the first drain pipe 82 and the second drain pipe 83 may form a flow path that guides washing water to be discharged to the outside. For convenience of description, the upper stream of the pump chamber 84 is referred to as the first drain pipe 82 and the lower stream is referred to as the second drain pipe 83. The first drain pipe 82 and the second drain pipe 83 may be integrally formed. The first drain pipe 82 may have, e.g., one end connected to the drain port 32 and the other end connected to the pump chamber 84. The washing water may move into the pump chamber 84 along the first drain pipe 82. The second drain pipe 83 may have, e.g., one end connected to the pump chamber 84 and the other end connected to the outside of the washer 1. Accordingly, the washing water passing through the pump chamber 84 may be discharged to the outside of the washer 1 along the second drain pipe 83.

In an example, the pump chamber 84 may be provided under the tub 30 to store washing water drained from the tub 30. Inside the pump chamber 84, e.g., a drain pump 841 for discharging the stored washing water to the outside may be provided. The washing water pumped by the drain pump 841 may be guided to the outside of the housing 10 through the second drain pipe 83.

According to an embodiment, the washer 1 may include a balancer 150. The balancer 150 may include, e.g., a balancer housing 151 forming an annular channel 151a and a plurality of mass bodies 153 disposed on the annular channel 151a to perform a balancing function of the drum 40 while moving along the annular channel 151a. The plurality of mass bodies 153 may have, e.g., a ball shape (a spherical shape). The plurality of mass bodies 153 of the drum 40 may move in a direction opposite to the direction of the eccentricity generated in the drum 40 by the laundry when the drum 40 rotates, compensating for the eccentricity generated by the laundry.

According to an embodiment, the balancer 150 may be mounted on at least one of the front plate 43 and the rear plate 44 of the drum 40. Since the balancers 150 mounted on the front plate 43 and the rear plate 44 are entirely the same, the following description focuses primarily on the balancer 150 mounted on the front plate 43 of the drum 40.

According to an embodiment, the balancer 150 may be configured to be received in an annular recess 48 formed as the front plate 43 of the drum 40 is open forward. For example, the balancer housing 151 is received in the annular recess 48 of the drum 40.

In an example, the balancer housing 151 may be formed of, e.g., a plastic material such as polypropylene or acrylonitrile butadiene styrene (ABS) resin by injection molding. In an example, the balancer housing 151 may be manufactured through a method of coupling in a thermal fusion method.

According to an embodiment, the washer 1 may include a vibration sensor 106. The vibration sensor 106 may be disposed on an outer circumferential surface of the drum 40 to detect vibration of the drum 40. For example, the vibration sensor 106 is disposed in a front direction and/or rear direction of the drum 40. Here, the front direction of the drum 40 may refer to a direction toward the front plate 43, and the rear direction of the drum 40 may refer to a direction toward the rear plate 44. The vibration sensor 106 may detect vibration while the drum 40 rotates, and the controller 120 may calculate the eccentric value of the drum 40 based on the vibration value measured by the vibration sensor 106.

According to an embodiment, the washer 1 may measure the eccentric value in the front direction of the drum 40 and the eccentric value in the rear direction of the drum 40, respectively, using one vibration sensor 106. For example, the vibration sensor 106 is an inertial measurement unit (IMU) sensor (or an inertial measurement device). The IMU sensor may be configured to measure the acceleration corresponding to linear motion and the angular velocity corresponding to rotational motion for each of the x-axis, y-axis, and z-axis. The washer 1 may measure vibration values and/or eccentric values at a plurality of positions on the drum 40 using one IMU sensor. For example, in the washer 1, when the IMU sensor is disposed on the front side of the drum 40, the vibration value and/or the eccentric value in the rear of the drum 40 as well as in the front of the drum 40 is measured/obtained. For example, when the IMU sensor is disposed on the rear side of the drum 40, the washer 1 may measure/obtain a vibration value and/or an eccentric value not only in the rear of the drum 40 but also in the front of the drum 40. For example, when the IMU is disposed at the central side of the drum 40, the washer 1 measures vibration values and/or eccentric values, respectively, in the front and rear of the drum 40.

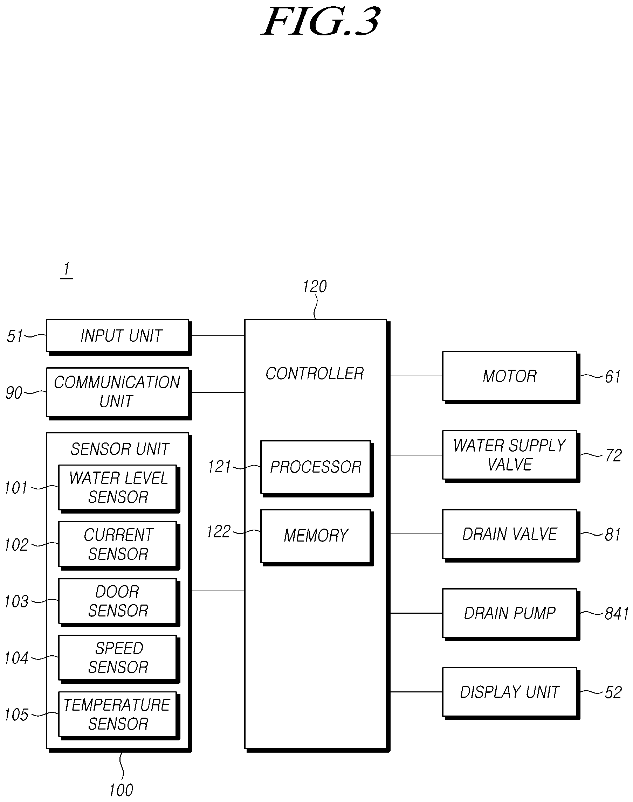

FIG. 3 is a functional block diagram schematically illustrating a configuration of a washer in terms of functions and controls according to an embodiment.

Referring to FIG. 3, the washer 1 may include an input unit 51 as described above with reference to FIG. 1. As described above, the input unit 51 may include any type of user input means for obtaining setting information from the user for controlling the operation of the washer 1. Various user inputs obtained through the input unit 51 may be transferred to the controller 120 to be described below. In an example, various user inputs obtained through the input unit 51 may be transmitted to the outside through the communication unit 90 to be described below, but the disclosure is not limited thereto.

In an example, the washer 1 may include a communication unit 90 that supports signal transmission/reception to/from the outside. In an example, the communication unit 90 may receive and/or transmit a wired/wireless signal to/from an external wired/wireless communication system, an external server, and/or other devices according to a predetermined wired/wireless communication protocol. In an example, the communication unit 90 may include one or more modules to connect the washer 1 to one or more networks. In an example, the communication unit 90 may include at least one of a mobile communication module, a wired/wireless Internet module, a short-range communication module, and/or a location information module.

In an example, the mobile communication module may transmit/receive wireless signals with at least one of an external base station, an external terminal, and an external server through the mobile communication network according to any communication protocol among various communication protocols for mobile communication. The wireless signals may include various types of data signals. In an example, the wireless signals may include voice call signals, video call signals, and text/multimedia message signals, but the disclosure is not limited thereto.

For example, the wired/wireless Internet module supports wireless LAN (WLAN), wireless-fidelity (Wi-Fi), Wi-Fi direct, digital living network alliance (DLNA), wireless broadband (WiBro), world interoperability for microwave access (WiMAX), high speed downlink packet access (HSDPA), high speed uplink packet access (HSUPA), long term evolution (LTE), or long term evolution-advanced (LTE-A), but is not limited thereto. In an example, the wired/wireless Internet module of the communication unit 90 may transmit/receive data according to at least one wired/wireless Internet technology among Internet technologies not listed above.

The short-range communication module may be intended for, e.g., short-range communication and may support short-range communication using at least one of Bluetooth, radio frequency identification (RFID), infrared data association (IrDA), ultra-wideband (UWB), ZigBee, near-field communication (NFC), Wi-Fi, Wi-Fi Direct, or wireless universal serial bus (USB) technology. The short-range communication module may support, e.g., wireless communication between the washer 1 and a wireless communication system, between the washer 1 and another device, or between the washer 1 and a network in which the other device is positioned through a short-range wireless communication network.

The location information module may be, e.g., a global positioning system (GPS) module or a Wi-Fi module as a module for obtaining the location of the washer 1. When the washer 1 utilizes the GPS module, the washer 1 may receive information about the location of the washer 1 using the signal transmitted from the GPS satellite. When the washer 1 utilizes the Wi-Fi module, the washer 1 may receive information about the location of the washer 1 based on information about a wireless access point (AP) that transmits and receives a wireless signal to and from the Wi-Fi module.

In an example, the communication unit 90 may receive the configuration data signal input by the user on the mobile terminal of the user in the form of a wireless signal according to a predetermined wireless communication protocol. In an example, the communication unit 90 may receive information and/or a command for controlling the operation of the washer 1 from an external server in the form of a signal according to a predetermined wired/wireless communication protocol. The communication unit 90 may transfer various received signals to the controller 120 to be described below. In an example, the communication unit 90 may transmit various data generated or obtained on the washer 1 in the form of a wired/wireless signal according to a predetermined wired/wireless communication protocol, e.g., to a mobile terminal of the user or an external server.

According to an embodiment, the washer 1 may include a sensor unit 100 for detecting an operating state and/or an internal environment of the washer 1. In an example, the sensor unit 100 may include a water level sensor 101, a current sensor 102, a door sensor 103, a speed sensor 104, and/or a temperature sensor 105, but this is illustrative and the disclosure is not limited thereto.

In an example, the water level sensor 101 is a sensor provided to detect the water level in the tub 30. In an example, the water level sensor 101 may be provided to identify a spinning progress or the like when performing the spinning process. The water level sensor 101 may transfer an electrical signal related to the water level in the tub 30 to the controller 120.

The current sensor 102 may be provided to detect the current flowing through the motor 61 of the driving device 60. The electrical signal related to the current value of the motor 61 generated by the current sensor 102 may be transferred to the controller 120.

The door sensor 103 may be provided to determine whether the door 20 is closed before the controller 120 performs the washing operation. An electrical signal regarding whether to open or close the door 20 generated by the door sensor 103 may be transferred to the controller 120.

The speed sensor 104 may be provided to detect the rotational speed, the rotational angle, or the rotational direction of the motor 61 or the drum 40. In an example, the speed sensor 104 may use, e.g., a scheme of detecting an on/off signal of the hall sensor adjacent to the position of the rotor while the motor 61 is running. In an example, the speed sensor 104 may use a scheme of measuring the magnitude of the current applied to the motor 61 while the drum 40 rotates. An electrical signal regarding the rotational speed, the rotational angle, or the rotational direction of the drum 40 generated by the speed sensor 104 may be transferred to the controller 120.

The temperature sensor 105 may be provided to detect the ambient environment temperature of the washer 1 or the temperature of the internal components, or to detect the temperature of the washing water in the tub 30. The temperature sensor 105 may be implemented as, e.g., a thermistor, which is a type of resistor using the property that the resistance of a material changes according to the temperature. The electrical signal related to the temperature generated by the temperature sensor 105 may be transferred to the controller 120.

The vibration sensor 106 may be provided to detect the amount of vibration of the drum 40 while the drum 40 rotates. The vibration sensor 106 may be, e.g., an IMU sensor. The vibration sensor 106 may detect the amount of vibration of the drum 40 during the spinning operation. The vibration-related signal obtained by the vibration sensor 106 may be used to estimate or measure the balance state of the laundry inside the drum 40.

According to an embodiment, the washer 1 may include the controller 120 for controlling the overall operation of the washer 1. The controller 120 may include memory 122 for storing or recording a program and/or data for controlling each component of the washer 1, and a processor 121 for generating a control signal for controlling each component of the washer 1 according to the program and/or data stored in the memory 122 and information obtained from each of the other components.

According to an example, the memory 122 may store various data that may be used to control the operation of each component of the washer 1. The memory 122 may store, e.g., a plurality of application programs used in the washer 1, data for controlling the operation of the washer 1, and instructions. At least some of the application programs stored in the memory 122 may be downloaded from an external server through wireless communication. At least some of the application programs stored in the memory 122 may be stored in the memory 122 from the time of shipment for the basic functions of the washer 1. In an example, the memory 122 may store various data serving as a reference that may be used to proceed with the spinning cycle to be described below.

In an example, the processor 121 of the controller 120 may receive various input/setting information, e.g., power on/off of the washer 1, washer operation setting information (e.g., operation start/stop, course selection, time selection, etc.), or other various control information from the input unit 51 and/or the communication unit 90 described above. The processor 121 may obtain various sensing information, e.g., information about the water level in the tub 30 detected by the water level sensor 101, information about the current flowing through the motor 61 detected by the current sensor 102, information indicating whether the door is opened or closed as detected by the door sensor 103, information about the rotational speed of the motor 61 or the drum 40 detected by the speed sensor 104, and the like, from the sensor unit 100. The processor 121 may obtain, e.g., information indicating the amount of vibration of the drum 40 from the vibration sensor 106 to estimate or obtain the eccentric value of the drum 40. The processor 121 may estimate or obtain, e.g., a front eccentric value of the drum 40 and a rear eccentric value of the drum 40 using one vibration sensor 106.

In an example, the processor 121 of the controller 120 may generate an operation control command for each component of the washer 1, based on various information received from the input unit 51, the communication unit 90, and/or the sensor unit 100. In an example, the processor 121 may control each related component to perform at least one of the washing cycle, the rinsing cycle, the spinning cycle, or the drying cycle. The processor 121 may control the operation of, e.g., the driving device 60, the water supply device 70, and/or the drain device 80 to control the execution of at least one of the washing operation, the rinsing operation, the spinning operation, or the drying operation. In an example, the processor 121 may rotate the drum 40 by controlling the driving of the motor 61 of the driving device 60. For example, the processor 121 controls the opening and closing of the water supply valve 72 of the water supply device 70 to adjust the washing water supplied to the drum 40 and/or the tub 30. For example, the processor 121 controls the drain valve 81 and/or the drain pump 841 of the drain device 80 to drain the washing water in the drum 40 and/or the tub 30. In an example, the processor 121 may continuously obtain information from the input unit 51, the communication unit 90, and/or the sensor unit 100 while performing at least one of the washing cycle, the rinsing cycle, the spinning cycle, or the drying cycle, and may continuously update and control the operation of each component based on the obtained information.

In an example, the processor 121 of the controller 120 may generate a command for controlling whether and how to display information through the display unit 52, based on various types of information received from the input unit 51, the communication unit 90, and/or the sensor unit 100.

In this drawings, it is disclosed that the controller 120 is a comprehensive component for controlling all the components included in the washer 1, but the disclosure is not limited thereto. In an example, the washer 1 may be configured to include a plurality of controller components that individually control some of the components of the washer 1. In an example, the washer 1 may include a separate controller having a processor and memory for controlling the operation of the driving device 60, e.g., the motor 61. In an example, the washer 1 may include a separate controller having a processor and memory for controlling the operation of a user interface according to a user input. The processor 121 of the controller 120 may include a plurality of processors, and the memory 122 may include a plurality of memory devices. The above description has been made using a washer as an example, but various embodiments of the disclosure may be equally applied not only to the washer but also to the dryer.

When a weight sensor is used to measure the weight of clothes to be washed or clothes to be dried, it may be difficult to precisely measure the weight of the cloth. In order to precisely measure the weight of the laundry, the weight of the cloth may be estimated by measuring the load of the motor of the device for washing or drying. The load applied to the motor may be measured by measuring the current flowing during a predetermined time period of several seconds. The heavier the cloth is, the greater the counter electromotive force may be, and the average current value may increase. However, when only the average current value is used to measure the weight of the laundry, an error may occur with the actual weight of the cloth. In particular, in a high load area, i.e., when the weight of the laundry is relatively large or when the eccentricity caused by the cloth is large, the current value is not constant but varies significantly, so that a large difference in average value may occur. Since the function of indicating the entire washing and drying time is performed based on a weight detection technology of a device for washing and drying, if a difference from the time when washing and drying are actually performed is large, causing inconvenience to use by the user. According to embodiments of the disclosure, it is possible to provide user convenience by minimizing an error in cycle time through accurate weight measurement of laundry and an object to be dried. Embodiments of the disclosure may calculate the standard deviation, the maximum current value, and the accumulated induced electromotive force (differential accumulated value), in addition to the average current, and train a machine learning model based thereon, thereby accurately measuring the weight of the laundry and the object to be dried. As the machine learning model, a support vector regression (SVR) algorithm may be used, and the SVR algorithm, as a supervised learning algorithm, may include an algorithm used to address the regression problem. Further, the non-linear relationship between various current data has been created into a linear regression model with superior prediction performance by applying the Gaussian kernel technique, which may provide an accurate weight detection result even when there is noise.

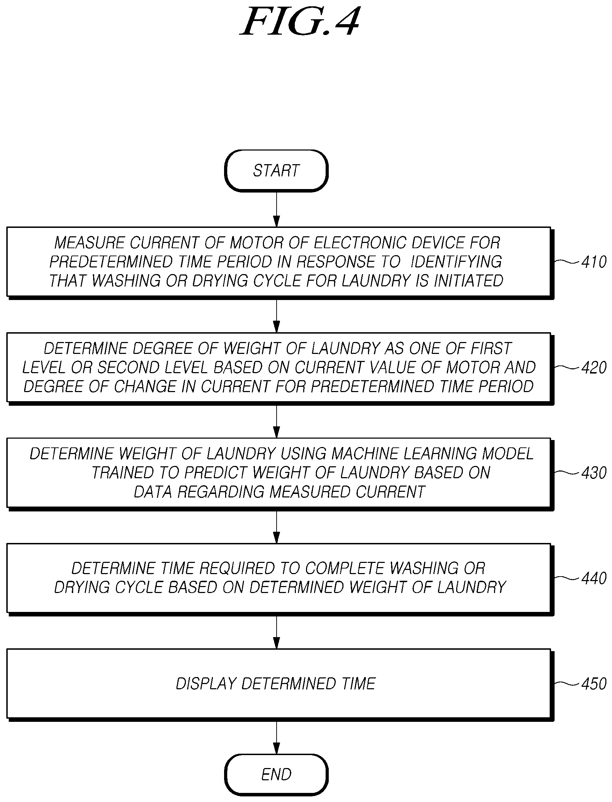

FIG. 4 is a flowchart illustrating an operation of a device for performing washing or drying according to an embodiment. A device for performing washing or drying may be referred to as an electronic device for convenience of description. The electronic device of FIG. 4 may include a device corresponding to the washer 1 described with reference to FIGS. 1 to 3. In the following description with reference to FIG. 4, the term "laundry" collectively refers to clothes put into the washing or drying device, and may encompass both clothes to be washed and clothes to be dried.

Referring to FIG. 4, in operation 410, the electronic device may measure the current of the motor of the electronic device for a predetermined time period in response to identifying that the washing or drying cycle for the laundry is initiated.

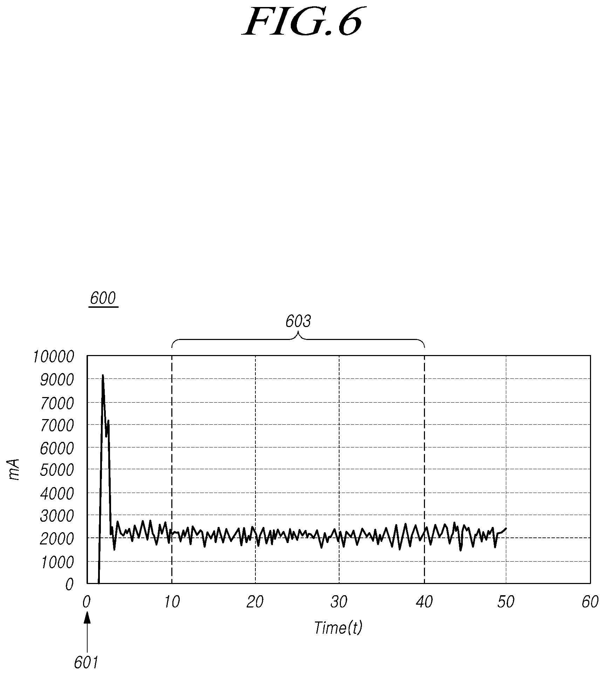

In an embodiment, the predetermined time period may include a predetermined time period after the washing or drying cycle is initiated. For example, referring to FIG. 6, the predetermined time period includes a time period 603 from 10 seconds after a time point 601 at which the washing or drying cycle is initiated to 40 seconds after the time point 601.

In an embodiment, the electronic device may reversely rotate the motor of the electronic device to measure the current of the motor based on the torque change and the counter electromotive force of the motor measured by the rotation of the laundry.

In an embodiment, the measured current of the motor may have the same shape as the graph shown in FIG. 6, and the current data used to measure the weight of the laundry may include only the current data measured in the predetermined time period.

In an embodiment, the electronic device may obtain motor current data by measuring the current of the motor of the electronic device. The motor current data may be referred to as a motor current profile.

According to an embodiment, in operation 420, the electronic device may determine the degree of the weight of the laundry to be one of a first level or a second level, based on the current value of the motor and the degree of change in the current for the predetermined time period.

In an embodiment, the electronic device may identify the current value of the motor and the degree of change in the current based on the motor current data. The current value of the motor may include a value related to the magnitude of the current measured on the motor. The degree of change in the current of the motor may include a value related to the degree of change in the current of the motor. For example, the current value of the motor includes the average current value of the current measured on the motor for the predetermined time period. For example, the degree of change in the current of the motor includes the standard deviation value of the current of the motor.

In an embodiment, the average current value of the motor may be determined based on Equation 1 below.

[Equation 1]

$$I_{avg}(t1:t2) = \sum_{t1}^{t2} I(t)/N$$

In Equation 1, $I_{avg}(t1:t2)$ may mean the average current value measured during a period from t1 to t5. t1 may mean the start point (e.g., 10 seconds of FIG. 6) of the predetermined time period, and t2 may mean the end point (e.g., 40 seconds of FIG. 6) of the predetermined time period. Further, I(t) may mean the current value (mA) of the motor measured at the time point t. N may mean the number of current values measured in the predetermined time period.

In an embodiment, the standard deviation value of the current of the motor may be determined based on Equation 2 below.

[Equation 2]

$$I_{stdev}(t1:t2) = \sqrt{\sum_{t1}^{t2} \frac{|I(t) - I_{avg}(t1:t2)|}{N}}$$

In Equation 2, $I_{stdev}(t1:t2)$ may mean the standard deviation value of the current measured during the period from t1 to t2. t1 may mean the start point (e.g., 10 seconds of FIG. 6) of the predetermined time period, and t2 may mean the end point (e.g., 40 seconds of FIG. 6) of the predetermined time period. Further, I(t) may mean the current value (mA) of the motor measured at the time point t. $I_{avg}(t1:t2)$ may mean the average current value measured during the period from t1 to t5. N may mean the number of current values measured in the predetermined time period.

In an embodiment, when the current value of the motor is less than or equal to the first threshold and the degree of change in the current of the motor is less than or equal to the second threshold, the electronic device may determine the degree of weight of the laundry as the first level. For example, when the average current value is less than or equal to the first threshold and the standard deviation value of the current is less than or equal to the second threshold, the electronic device determines the weight of the laundry as the first level. The first level may mean a degree to which the weight of the laundry is a low weight (low load) and the eccentric value is small.

In an embodiment, when the current value of the motor is larger than the first threshold or the degree of change in the current of the motor is larger than the second threshold, the electronic device may determine the degree of weight of the laundry as the second level. In other words, when the weight of the laundry put into the electronic device is not the first level, the electronic device may determine it as the second level.

According to an embodiment, in operation 430, the electronic device may determine the weight of the laundry using a machine learning model trained to predict the weight of the laundry based on the measured current data.

In an embodiment, the machine learning model may be trained to predict the weight of the laundry based on the measured current data (e.g., the current profile data described with reference to operation 410).

In an embodiment, the machine learning model may be learned in the electronic device or a server connected to the electronic device.

In an embodiment, the machine learning model may be trained using a support vector regression (SVR) algorithm using the measured current data as an input value.

In an embodiment, the electronic device may measure a reference average current value. The reference average current value may mean a current value measured when there is no laundry put into the electronic device. For example, the electronic device identifies the reference average current value based on the current value measured in the washing or drying cycle (e.g., the course for sterilizing the internal space of the electronic device) performed without the laundry put in.

According to an embodiment, the measured current data may include an average current value measured in the predetermined time period and a standard deviation value of the current measured in the predetermined time period. The measured current data may include the maximum current value measured in the predetermined time period, the differential accumulated value of the current measured in the predetermined time period, the difference value between the average current value and the reference current value, and the value regarding the ratio between the average current value and the reference current value. The difference may be corrected by using a value obtained by excluding the portion occupied by the reference current value from the average current value as a feature point, rather than using the average current value as it is.

In an embodiment, the electronic device may determine the differential accumulated value of the current based on the motor current data. The differential accumulated value may be determined based on Equation 3 below.

[Equation 3]

$$\sum_{t1}^{t2}\left|\frac{dI(t)}{dt}\right| = \sum_{t1}^{t2}|I(t+\Delta t) - I(t)|$$

t1 may mean the start point of the predetermined time period, and t2 may mean the end point of the predetermined time period. $\triangle$t may mean the sampling time. I(t) may mean the current value (mA) of the motor measured at the time point t. I(t+$\triangle$t) may mean the current value of the motor measured at the time point t+$\triangle$t.

In an embodiment, the electronic device may determine the maximum current value based on the motor current data. The maximum current value may mean the largest current value among current values measured during the predetermined time period.

In an embodiment, the electronic device may identify the difference value and the ratio value between the average current value and the existing average current value, based on the motor current data and the reference average current value.

In an embodiment, the machine learning model may be trained based on a plurality of values, i.e., feature points, included in the measured current data. For example, the machine learning model is trained based on a single feature point or may be trained based on multiple feature points.

In an embodiment, the machine learning model may be learned using Equations 4 and 5 below. In other words, the machine learning model may estimate the weight based on the measured current data, and the weight may be determined based on Equations 4 and 5 below.

[Equation 4]

$$W = b + \sum_{i=1}^{n} \alpha_i K(x, x')$$

[Equation 5]

$$K(x, x') = e^{-\gamma \|x - x'\|^2}, \quad x = \frac{F - \mu}{\sigma}$$

In Equation 4, W may mean the weight of the laundry. Further, x may mean the predictor variable, and x' may mean the support vector. K may mean the Gaussian kernel, and a may mean the constant value determined according to learning.

In Equation 5, x may mean the predictor variable, and x' may mean the support vector. K may mean the Gaussian kernel. F may mean the feature point value.

In embodiments of the disclosure, an example in which the machine learning model is trained based on an SVR algorithm is described, but a decision tree-based random forest and a gradient boosting algorithm may be used. In this regard, a variable tuning process may be accompanied to prevent an overfitting problem from occurring.

In an embodiment, when the electronic device determines the degree of the weight of the laundry as the first level, the electronic device may determine the weight of the laundry using the average current value as the input value to the machine learning model. In other words, the electronic device may estimate the weight using the SVR algorithm using the average current value as a single feature point.

In an embodiment, when the electronic device determines the degree of the weight of the laundry as the second level, the electronic device may determine the weight of the laundry using the average current value and the standard deviation value of the current as input values to the machine learning model. In other words, the electronic device may estimate the weight using the SVR algorithm using the average current value and the standard deviation value of the current as feature points.

In an embodiment, when the electronic device determines the degree of the weight of the laundry as the second level, the electronic device may determine the weight of the laundry by using, as an input value to the machine learning model, not only the average current value and the standard deviation value of the current, but also at least one of feature point values constituting the above-described current data. In other words, the electronic device may estimate the weight using the SVR algorithm based on multiple feature points.

In an embodiment, when determining the degree of weight of the laundry as the second level, the electronic device may select at least two feature points to be used as input values to be used in the machine learning model among the data regarding the measured current. The at least two feature points may include the average current value and the standard deviation value of the current.

In an embodiment, when the average current value of the current is less than or equal to the first threshold but the standard deviation value of the current is larger than the second threshold, the electronic device may select the average current value, the standard deviation value of the current, and the differential accumulated value from among the measured current data.

In an embodiment, when the average current value of the current is larger than the second threshold and the standard deviation value of the current is larger than the first threshold, the electronic device may select the average current value, the standard deviation value of the current, and the reference current value from among the measured current data.

According to an embodiment, in operation 440, the electronic device may determine the time required to complete the washing or drying cycle, based on the determined weight of the laundry.

In an embodiment, the electronic device may transmit, to the server, data regarding the current of the motor of the electronic device measured in operation 420, information about the obtained feature points, and information about the weight determined in operation 430. The server may update the machine learning model based on the data received from the electronic device.

In an embodiment, the electronic device may request the server to update the machine learning model every predetermined period.

In an embodiment, when the electronic device identifies that the predetermined period arrives, the electronic device may display a user interface indicating that the machine learning model needs to be updated. The user interface may include information related to the update. For example, the user interface includes the update period, the update history, information about learning data on which the update is based, and the object for identifying the user input for performing the update.

According to an embodiment, in operation 450, the electronic device may display the determined time.

In an embodiment, the electronic device may transmit information about the determined time to the server and a user device connected to the electronic device. The user device may display the expected time information received from the electronic device, and the user may receive information about the time required to complete the washing or drying cycle.

In an embodiment, when the electronic device identifies that the required time of the washing or drying cycle is changed according to weight detection, the electronic device may transmit information about the required time of the washing or drying cycle to the user device.

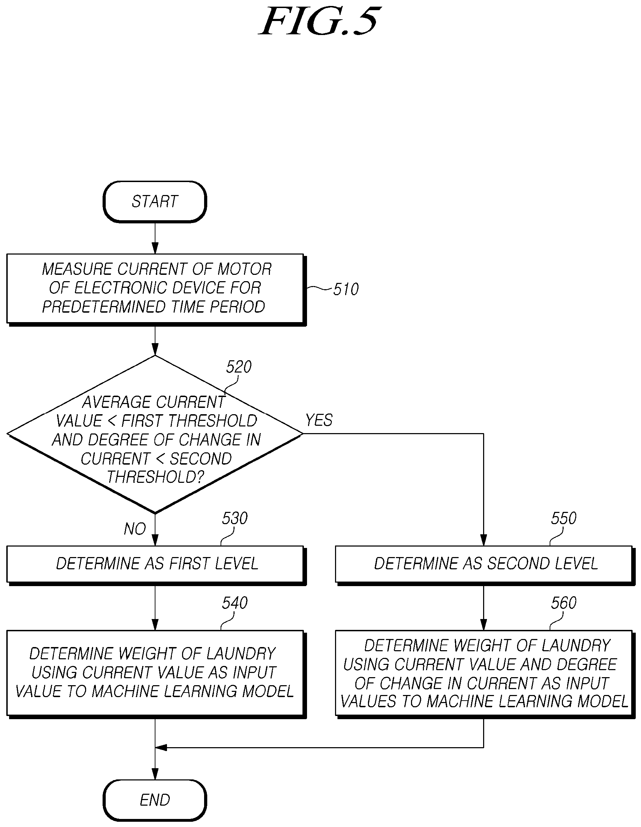

FIG. 5 illustrates an operation flow of an electronic device according to an embodiment. The electronic device of FIG. 5 may include the washer 1 of FIGS. 1 to 3 or the device for washing and drying of FIG. 4. The operations of FIG. 5 may include all of the operations described with reference to FIG. 4.

Referring to FIG. 5, in operation 510, the electronic device may measure the current of the motor of the electronic device for the predetermined time period. Operation 510 may include the whole of operation 410 of FIG. 4.

In an embodiment, the electronic device may identify the revolutions per minute (RPM) of the motor. For example, the electronic device identifies that the RPM of the motor is 40 RPM. The electronic device may measure the current of the motor based on the identified RPM.

In an embodiment, the electronic device may operate the motor through various types of RPMs. For example, the electronic device operates the motor at 40 RPM or may operate the motor at an RPM greater or less than 40 RPM.

In an embodiment, the electronic device may change the RPM of the motor within the predetermined time period of the washing or drying cycle. The electronic device may obtain new current data based on the changed RPM of the motor, and may perform the following operations based thereon.

According to an embodiment, in operation 520, the electronic device may determine whether the average current value is larger than the first threshold and the degree of change in the current is larger than the second threshold. Operation 520 may include the whole of operation 420 of FIG. 4.

In an embodiment, the electronic device may identify the current value of the motor and the degree of change in the current based on the motor current data. The current value of the motor may include a value related to the magnitude of the current measured on the motor. The degree of change in the current of the motor may include a value related to the degree of change in the current of the motor. For example, the current value of the motor may include the average current value of the current measured on the motor for the predetermined time period. For example, the degree of change in the current of the motor includes the standard deviation value of the current of the motor.

In an embodiment, when the current value of the motor is less than or equal to the first threshold and the degree of change in the current of the motor is less than or equal to the second threshold, the electronic device may determine the degree of weight of the laundry as the first level. For example, when the average current value is less than or equal to the first threshold and the standard deviation value of the current is less than or equal to the second threshold, the electronic device determines the weight of the laundry as the first level. The first level may mean a degree to which the weight of the laundry is a low weight (low load) and the eccentric value is small.

In an embodiment, when the current value of the motor is larger than the first threshold or the degree of change in the current of the motor is larger than the second threshold, the electronic device may determine the degree of weight of the laundry as the second level. In other words, when the weight of the laundry put into the electronic device is not the first level, the electronic device may determine it as the second level.

In an embodiment, when the electronic device determines that the average current value is less than the first threshold and the degree of change in the current is less than the second threshold, the electronic device may perform operation 530.

In an embodiment, when the electronic device determines that the average current value is larger than the first threshold or the degree of change in the current is larger than the second threshold, the electronic device may perform operation 550.

According to an embodiment, in operation 530, the electronic device may determine the degree of the weight of the laundry as the first level. The operations of operation 530 may include all the operations of operation 420 of FIG. 4.

According to an embodiment, in operation 540, the electronic device may determine the weight of the laundry using the current value as the input value to the machine learning model.

According to an embodiment, in operation 550, the electronic device may determine the degree of the weight of the laundry as the second level.

In operation 560 according to an embodiment, the electronic device may determine the weight of the laundry using at least two of the maximum current value measured in the predetermined time period, the differential accumulated value of the current measured in the predetermined time period, the reference current value of the motor, the information about the amount of change in the current of the motor, or the current value of the motor as input values to the machine learning model. For example, the electronic device determines the weight of the laundry using the current value and the degree of change in current as input values to the machine learning model.

In an embodiment, the electronic device may determine the weight of the laundry using a machine learning model trained to predict the weight of the laundry based on the measured current data.

In an embodiment, the machine learning model may be trained to predict the weight of the laundry based on the measured current data (e.g., current profile data).

In an embodiment, the machine learning model may be learned in the electronic device or a server connected to the electronic device.

In an embodiment, the machine learning model may be trained using a support vector regression (SVR) algorithm using the measured current data as an input value.

In an embodiment, the electronic device may measure a reference average current value. The reference average current value may mean a current value measured when there is no laundry put into the electronic device. For example, the electronic device identifies the reference average current value based on the current value measured in the washing or drying cycle (e.g., the course for sterilizing the internal space of the electronic device) performed without the laundry put in.

According to an embodiment, the measured current data may include an average current value measured in the predetermined time period and a standard deviation value of the current measured in the predetermined time period. The measured current data may include the maximum current value measured in the predetermined time period, the differential accumulated value of the current measured in the predetermined time period, the difference value between the average current value and the reference current value, and the value regarding the ratio between the average current value and the reference current value. The difference may be corrected by using a value obtained by excluding the portion occupied by the reference current value from the average current value as a feature point, rather than using the average current value as it is.

In an embodiment, the electronic device may determine the differential accumulated value of the current based on the motor current data.

In an embodiment, the electronic device may determine the maximum current value based on the motor current data. The maximum current value may mean the largest current value among current values measured during the predetermined time period.

In an embodiment, the electronic device may identify the difference value and the ratio value between the average current value and the existing average current value, based on the motor current data and the reference average current value.

In an embodiment, the machine learning model may be trained based on a plurality of values, i.e., feature points, included in the measured current data. For example, the machine learning model is trained based on a single feature point or may be trained based on multiple feature points.

In an embodiment, the machine learning model may be learned using Equations 4 and 5 above. In other words, the machine learning model may estimate the weight based on the measured current data.

In an embodiment, when the electronic device determines the degree of the weight of the laundry as the first level, the electronic device may determine the weight of the laundry using the average current value as the input value to the machine learning model. In other words, the electronic device may estimate the weight using the SVR algorithm using the average current value as a single feature point.

In an embodiment, when the electronic device determines the degree of the weight of the laundry as the second level, the electronic device may determine the weight of the laundry using the average current value and the standard deviation value of the current as input values to the machine learning model. In other words, the electronic device may estimate the weight using the SVR algorithm using the average current value and the standard deviation value of the current as feature points.

In an embodiment, when the electronic device determines the degree of the weight of the laundry as the second level, the electronic device may determine the weight of the laundry by using, as an input value to the machine learning model, not only the average current value and the standard deviation value of the current, but also at least one of feature point values constituting the above-described current data. In other words, the electronic device may estimate the weight using the SVR algorithm based on multiple feature points.

In an embodiment, when determining the degree of weight of the laundry as the second level, the electronic device may select at least two feature points to be used as input values to be used in the machine learning model among the data regarding the measured current. The at least two feature points may include the average current value and the standard deviation value of the current.

In an embodiment, when the average current value of the current is less than or equal to the first threshold but the standard deviation value of the current is larger than the second threshold, the electronic device may select the average current value, the standard deviation value of the current, and the differential accumulated value from among the measured current data.

In an embodiment, when the average current value of the current is larger than the second threshold and the standard deviation value of the current is larger than the first threshold, the electronic device may select the average current value, the standard deviation value of the current, and the reference current value from among the measured current data.

Operations 520, 530, and 540 described above may correspond to an operation in which, in operation 420 of FIG. 4, the electronic device determines the degree of weight of the laundry as the first level based on the current value of the motor and the degree of change in the current for the predetermined time period and determines the weight using a single feature point (average current value) as an input value to the machine learning model. Further, operations 520, 550, and 560 may correspond to an operation in which, in operation 420 of FIG. 4, the electronic device determines the degree of weight of the laundry as the second level based on the current value of the motor and the degree of change in the current for the predetermined time period, and determines the weight using multiple feature points (the average current value, the standard deviation value, and values included in the measured current data (e.g., the maximum current value, the differential accumulated value, the difference value between the average current value and the reference current value) as input values to the machine learning model.

FIG. 6 illustrates an example of a current measured according to a washing or drying cycle according to an embodiment. Referring to FIG. 6, a time period from 10 seconds after a cycle start time point 601 which is the start point of the washing or drying cycle to 40 seconds after the cycle start time point 601 may correspond to the predetermined time period 603. Based on the current measured in the time period 603, the average current value, the standard deviation value of the current, the maximum current value, the differential accumulated value, and the difference value from the reference current may be calculated. These values, i.e., the feature points, may be used as input values to the machine learning model according to whether the weight of the laundry is the first level or the second level, and may be used to measure the weight of the laundry.

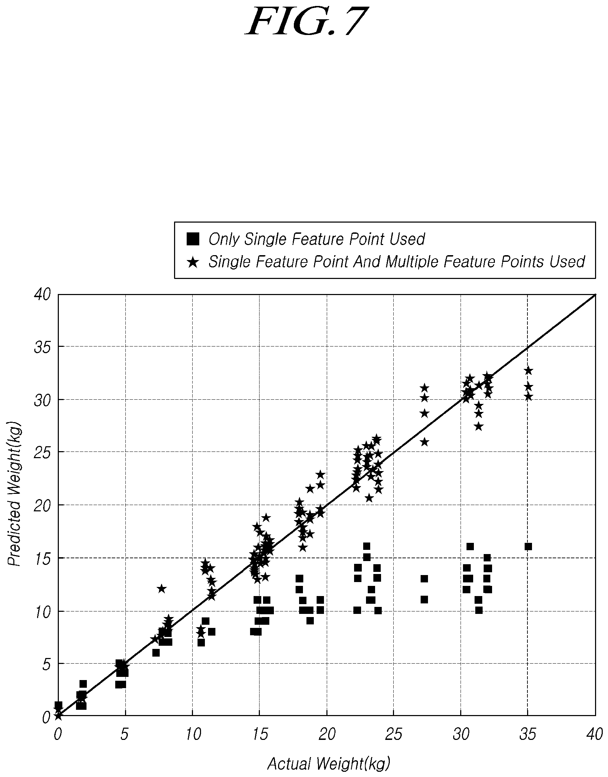

FIG. 7 illustrates a weight measurement result of an electronic device according to an embodiment.

Referring to FIG. 7, when the weight of the laundry is measured using only a single feature point in the conventional art, it may be identified that when the actual weight of the laundry is a low weight, there is a small error, but the error gradually increases as the weight increases. This is because an error occurs in the measured weight as the weight increases, and an error may occur in the measured weight due to large eccentricity according to the high weight.

According to an embodiment, the degree of the weight of the laundry may be divided into a first level (low load) and a second level (high load), and it may be identified that the weight may be more accurately predicted using only a single feature point or using both a single feature point and multiple feature points according to the level.

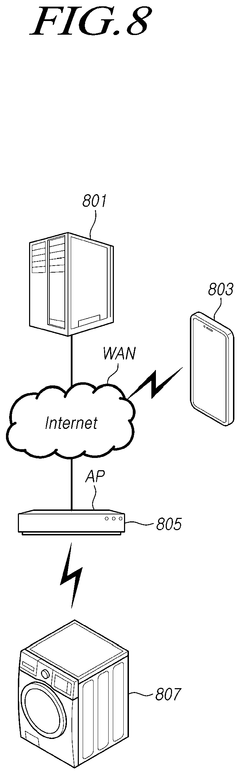

FIG. 8 illustrates an example of an IoT environment including an electronic device according to an embodiment.

Referring to FIG. 8, the IoT environment may include a server device 801, a user device 803, an AP 805, and an IoT device 807.

The server device 801 according to an embodiment may refer to a server, a cloud server, or a cloud server device that is interconnected with a plurality of electronic devices positioned at long distances to support an IoT platform. The IoT network server may collectively refer to all servers or devices supporting the IoT platform.

The user device 803 according to an embodiment may refer to an electronic device carried by the user. For example, the user device 803 includes a mobile computing device such as a smart phone, a tablet personal computer (PC), a wearable device (e.g., a smart watch), a personal digital assistant (PDA), a laptop computer, a media player, a micro server, a global positioning system (GPS) device, or the like.

The AP 805 according to an embodiment may serve as a base station in a wireless LAN and may serve to connect a wired network and a wireless network. For example, the AP 805 serves as a bridge connecting the wireless LAN to which the IoT device 807 is connected and the server device 801. For example, the AP 805 serves as a bridge connecting the IoT device 807 and the user device 803.

The IoT device 807 according to an embodiment may include a washer and a dryer. The IoT device 807 may include a device corresponding to the washer 1 of FIGS. 1 to 3, the device for performing washing and drying of FIG. 4, and the electronic device of FIG. 5.

The IoT device 807 according to an embodiment may be connected to the server device 801 in at least one of a wired communication scheme or a wireless communication scheme.

The IoT device 807 according to an embodiment may be connected to the server device 801 through the AP 805.

In an embodiment, to connect the IoT device 807 to the server device 801, technologies such as wireless broadband (WiBro), world interoperability for microwave access (WiMAX), code division multiple access (CDMA), wideband CDMA (WCDMA), third generation (3G), fourth generation (4G), long term evolution (LTE), LTE-A, fifth generation (5G), new radio (NR), near field communication (NFC), Bluetooth, and wireless local area network (WLAN) may be used

In an embodiment, the IoT device 807 may transmit the current data measured in FIGS. 4 to 5 to the server device 801 through the AP 805. For example, the IoT device 807 transmits, to the server device 801, information about the average current value, the standard deviation value of the current, the maximum current value, the minimum current value, the differential accumulated value, the reference current value, the difference between the average current value and the reference current value, and the ratio between the average current value and the reference current value, for the current measured in the predetermined time period. For example, the IoT device 807 transmits information about the measured weight and the time calculated based on the measured weight to the server device 801.

In an embodiment, the server device 801 may update the machine learning model, based on the data received from the IoT device 807.

In an embodiment, the server device 801 may transmit information about the updated machine learning model to the IoT device 807.

In an embodiment, the IoT device 807 may request the server device 801 to update the machine learning model. For example, when it is identified that the predetermined period for updating elapses, the IoT device 807 requests the server device 801 to update the machine learning model for estimating the weight of the laundry.

In an embodiment, the IoT device 807 may transmit information about the expected required time of the washing or drying cycle calculated based on the measured weight to the user device 803. For example, information about the calculated end time of the washing or drying cycle and, when the end time is changed, information about the changed end time may be transmitted to the user device 803.

A method for operating an electronic device for performing washing or drying, according to an embodiment, may comprise measuring a current of a motor of the electronic device for a predetermined time period in response to identifying that a washing or drying cycle for laundry is initiated. The method for operating the electronic device may comprise determining a weight of the laundry as one of a first level or a second level based on a current value of the motor and a degree of change in the current for the predetermined time period. The method for operating the electronic device may comprise determining the weight of the laundry using the current value of the motor as an input value to a machine learning model trained to predict the weight of the laundry based on current profile information in response to determining the weight of the laundry as the first level. The method for operating the electronic device may comprise determining the weight of the laundry using at least two of a maximum current value measured in the predetermined time period, a differential accumulated value of the current measured in the predetermined time period, a reference current value of the motor, information about an amount of the change in the current of the motor, or the current value of the motor as input values to the machine learning model, in response to determining the weight of the laundry as the second level. The method for operating the electronic device may comprise determining a time required to complete the washing or drying cycle, based on the determined weight of the laundry. The method for operating the electronic device may comprise displaying the determined time.

According to an embodiment, the method for operating the electronic device may further comprise, when the current value of the motor is larger than or equal to a first threshold and the degree of the change in the current is larger than or equal to a second threshold, determining the weight of the laundry as the second level.

According to an embodiment, the machine learning model may be trained based on a support vector regression (SVR) algorithm.

According to an embodiment, the method for operating the electronic device may further comprise identifying revolutions per minute (RPM) of the motor, measuring the current of the motor based on the RPM, and determining an average current value of the motor for the predetermined time period as the current value of the motor.

According to an embodiment, the current value of the motor may include an average current value of the motor for the predetermined time period, and the degree of change in the current may include a standard deviation value of the current of the motor for the predetermined time period.

According to an embodiment, the method for operating the electronic device may further comprise measuring a reference current of the motor in response to identifying that the washing or drying cycle is initiated without the laundry, and determining the weight of the laundry based on the reference current.

According to an embodiment, determining the weight of the laundry in response to determining the weight of the laundry as the second level may include selecting at least one of the maximum current value, the differential accumulated value, or the reference current value, and determining the weight of the laundry using the selected value, the information about the amount of the change in the current, and the current value of the motor as input values.

According to an embodiment, the method for operating the electronic device may further comprise transmitting, to a server, data regarding the measured current of the motor.

According to an embodiment, the method for operating the electronic device may further comprise transmitting, to a server, a request for updating the machine learning model every predetermined period.

According to an embodiment, the method for operating the electronic device may further comprise receiving an updated machine learning model from a server.

According to an embodiment, the method for operating the electronic device may further comprise displaying a user interface including information for updating the machine learning model, in response to identifying that the predetermined period arrives.

According to an embodiment, the method for operating the electronic device may further comprise transmitting, to a user device, information about the time required to complete the washing or drying cycle.

An electronic device according to an embodiment may comprise memory storing at least one program and at least one processor electrically connected to the memory and executing at least one instruction of the program stored in the memory. The at least one processor may be configured to measure a current of a motor of the electronic device for a predetermined time period in response to identifying that a washing or drying cycle for laundry is initiated. The at least one processor may be configured to determine a weight of the laundry as one of a first level or a second level based on a current value of the motor and a degree of change in the current for the predetermined time period. The at least one processor may be configured to determine the weight of the laundry using the current value of the motor as an input value to a machine learning model trained to predict the weight of the laundry based on current profile information in response to determining the weight of the laundry as the first level. The at least one processor may be configured to determine the weight of the laundry using at least two of a maximum current value measured in the predetermined time period, a differential accumulated value of the current measured in the predetermined time period, a reference current value of the motor, information about an amount of the change in the current of the motor, or the current value of the motor as input values to the machine learning model, in response to determining the weight of the laundry as the second level. The at least one processor may be configured to determine a time required to complete the washing or drying cycle, based on the determined weight of the laundry. The at least one processor may be configured to display the determined time.

According to an embodiment, the at least one processor may be configured to, when the current value of the motor is larger than or equal to a first threshold and the degree of the change in the current is larger than or equal to a second threshold, determine the weight of the laundry as the second level.

According to an embodiment, the machine learning model may be trained based on a support vector regression (SVR) algorithm.

According to an embodiment, the at least one processor may be configured to identify revolutions per minute (RPM) of the motor, measure the current of the motor based on the RPM, and determine an average current value of the motor for the predetermined time period as the current value of the motor.

According to an embodiment, the current value of the motor may include an average current value of the motor for the predetermined time period, and the degree of change in the current may include a standard deviation value of the current of the motor for the predetermined time period.

According to an embodiment, the at least one processor may be configured to measure a reference current of the motor in response to identifying that the washing or drying cycle is initiated without the laundry, and determine the weight of the laundry based on the reference current.

According to an embodiment, determining the weight of the laundry in response to determining the weight of the laundry as the second level may include selecting at least one of the maximum current value, the differential accumulated value, or the reference current value, and determining the weight of the laundry using the selected value, the information about the amount of the change in the current, and the current value of the motor as input values.

According to an embodiment, the at least one processor may be configured to transmit, to a server, data regarding the measured current of the motor.

According to an embodiment, the at least one processor may generate measured current data comprising the maximum current value measured in the predetermined time period, the differential accumulated value of the current measured in the predetermined time period, a difference value between the average current value and the reference current value, and a value regarding a ratio between the average current value and the reference current value.

According to an embodiment, the at least one processor may estimate the weight using the SVR algorithm based on multiple feature points.

According to an embodiment, one or more non-transitory computer-readable storage media storing one or more computer programs including computer-executable instructions that, when executed by one or more processors of an electronic device individually or collectively, cause the electronic device to perform operations are provided. The operations include measuring, by the electronic device, a current of a motor of the electronic device for a predetermined time period in response to identifying that a washing or drying cycle for laundry is initiated, determining, by the electronic device, a weight of the laundry as one of a first level or a second level based on a current value of the motor and a degree of change in the current for the predetermined time period, determining, by the electronic device, the weight of the laundry using the current value of the motor as an input value to a machine learning model trained to predict the weight of the laundry based on current profile information in response to determining the weight of the laundry as the first level, determining, by the electronic device, the weight of the laundry using at least two of a maximum current value measured in the predetermined time period, a differential accumulated value of the current measured in the predetermined time period, a reference current value of the motor, information about an amount of the change in the current of the motor, or the current value of the motor as input values to the machine learning model, in response to determining the weight of the laundry as the second level, determining, by the electronic device, a time required to complete the washing or drying cycle, based on the determined weight of the laundry, and displaying, by the electronic device, the determined time.

According to an embodiment, when the current value of the motor is larger than or equal to a first threshold and the degree of the change in the current is larger than or equal to a second threshold, determining the weight of the laundry as the second level.

The electronic device according to various embodiments of the disclosure may be one of various types of electronic devices. The electronic device may include, e.g., a washer or a dryer.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module is implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 121) of the machine (e.g., the electronic device 101) invokes at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store™), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

While the disclosure has been shown and described with reference to various embodiments thereof, it will be understood by those skilled in the art that various changes in form and details may be made therein without departing from the spirit and scope of the disclosure as defined by the appended claims and their equivalents.

**Claims**

1. A method performed by an electronic device for washing or drying, the method comprising:

   measuring, by the electronic device, a current of a motor of the electronic device for a predetermined time period in response to identifying that a washing or drying cycle for laundry is initiated;
   determining, by the electronic device, a weight of the laundry as one of a first level or a second level based on a current value of the motor and a degree of change in the current for the predetermined time period;
   determining, by the electronic device, the weight of the laundry using the current value of the motor as an input value to a machine learning model trained to predict the weight of the laundry based on current profile information in response to determining the weight of the laundry as the first level;
   determining, by the electronic device, the weight of the laundry using at least two of a maximum current value measured in the predetermined time period, a differential accumulated value of the current measured in the predetermined time period, a reference current value of the motor, information about an amount of the change in the current of the motor, or the current value of the motor as input values to the machine learning model, in response to determining the weight of the laundry as the second level;
   determining, by the electronic device, a time required to complete the washing or drying cycle, based on the determined weight of the laundry; and
   displaying, by the electronic device, the determined time.

2. The method of claim 1, further comprising:
   when the current value of the motor is larger than or equal to a first threshold and the degree of the change in the current is larger than or equal to a second threshold, determining the weight of the laundry as the second level.

3. The method of any one of claims 1 to 2, further comprising:

   identifying revolutions per minute (RPM) of the motor;
   measuring the current of the motor based on the RPM; and
   determining an average current value of the motor for the predetermined time period as the current value of the motor.

4. The method of claim 1,

   wherein the current value of the motor comprises an average current value of the motor for the predetermined time period, and
   wherein the degree of change in the current comprises a standard deviation value of the current of the motor for the predetermined time period.

5. The method of claim 4, further comprising:

   measuring a reference current of the motor in response to identifying that the washing or drying cycle is initiated without the laundry; and
   determining the weight of the laundry based on the reference current.

6. The method of claim 1, wherein determining the weight of the laundry in response to determining the weight of the laundry as the second level comprises:

   selecting at least one of the maximum current value, the differential accumulated value, or the reference current value; and
   determining the weight of the laundry using the selected value, the information about the amount of the change in the current, and the current value of the motor as input values.

7. The method of claim 1, further comprising:

transmitting, to a server, a request for updating the machine learning model every predetermined period, and receiving an updated machine learning model from a server.

8. The method of claim 1, further comprising:
displaying a user interface comprising information for updating the machine learning model, in response to identifying that the predetermined period arrives.

9. An electronic device, comprising:

memory storing one or more computer programs; and
one or more processors communicatively coupled to the memory,
wherein the one or more computer programs include computer-executable instructions that, when executed by the one or more processors individually or collectively, cause the electronic device to:

measure a current of a motor of the electronic device for a predetermined time period in response to identifying that a washing or drying cycle for laundry is initiated,
determine a weight of the laundry as one of a first level or a second level based on a current value of the motor and a degree of change in the current for the predetermined time period,
determine the weight of the laundry using the current value of the motor as an input value to a machine learning model trained to predict the weight of the laundry based on current profile information in response to determining the weight of the laundry as the first level,
determine the weight of the laundry using at least two of a maximum current value measured in the predetermined time period, a differential accumulated value of the current measured in the predetermined time period, a reference current value of the motor, information about an amount of the change in the current of the motor, or the current value of the motor as input values to the machine learning model, in response to determining the weight of the laundry as the second level,
determine a time required to complete the washing or drying cycle, based on the determined weight of the laundry, and
display the determined time.

10. The electronic device of claim 9, wherein the one or more computer programs further include computer-executable instructions that, when executed by the one or more processors individually or collectively, cause the electronic device to:
when the current value of the motor is larger than or equal to a first threshold and the degree of the change in the current is larger than or equal to a second threshold, determine the weight of the laundry as the second level.

11. The electronic device of claim 9, wherein the one or more computer programs further include computer-executable instructions that, when executed by the one or more processors individually or collectively, cause the electronic device to:

identify revolutions per minute (RPM) of the motor,
measure the current of the motor based on the RPM, and
determine an average current value of the motor for the predetermined time period as the current value of the motor.

12. The electronic device of claim 9,

wherein the current value of the motor comprises an average current value of the motor for the predetermined time period, and
wherein the degree of change in the current comprises a standard deviation value of the current of the motor for the predetermined time period.

13. The electronic device of claim 12, wherein the one or more computer programs further include computer-executable instructions that, when executed by the one or more processors individually or collectively, cause the electronic device to:

measure a reference current of the motor in response to identifying that the washing or drying cycle is initiated without the laundry, and

determine the weight of the laundry based on the reference current.

14. The electronic device of claim 9, wherein the determining of the weight of the laundry in response to determining the weight of the laundry as the second level comprises:

    selecting at least one of the maximum current value, the differential accumulated value, or the reference current value; and
    determining the weight of the laundry using the selected value, the information about the amount of the change in the current, and the current value of the motor as input values.

15. The electronic device of claim 9, wherein the one or more computer programs further include computer-executable instructions that, when executed by the one or more processors individually or collectively, cause the electronic device to transmit, to a server, data regarding the measured current of the motor.

# FIG.1

# FIG.2

# FIG.3

# FIG.4

```
                    ┌─────────────┐
                    │    START    │
                    └─────────────┘
                           │
                           ▼
┌──────────────────────────────────────────────────────┐
│   MEASURE CURRENT OF MOTOR OF ELECTRONIC DEVICE FOR    │
│  PREDETERMINED TIME PERIOD IN RESPONSE TO  IDENTIFYING │──410
│  THAT WASHING OR DRYING CYCLE FOR LAUNDRY IS INITIATED │
└──────────────────────────────────────────────────────┘
                           │
                           ▼
┌──────────────────────────────────────────────────────┐
│   DETERMINE DEGREE OF WEIGHT OF LAUNDRY AS ONE OF FIRST │
│ LEVEL OR SECOND LEVEL BASED ON CURRENT VALUE OF MOTOR AND│──420
│ DEGREE OF CHANGE IN CURRENT FOR PREDETERMINED TIME PERIOD│
└──────────────────────────────────────────────────────┘
                           │
                           ▼
┌──────────────────────────────────────────────────────┐
│  DETERMINE WEIGHT OF LAUNDRY USING MACHINE LEARNING MODEL│
│    TRAINED TO PREDICT WEIGHT OF LAUNDRY BASED ON        │──430
│        DATA REGARDING MEASURED CURRENT                  │
└──────────────────────────────────────────────────────┘
                           │
                           ▼
┌──────────────────────────────────────────────────────┐
│      DETERMINE TIME REQUIRED TO COMPLETE WASHING OR     │
│  DRYING CYCLE BASED ON DETERMINED WEIGHT OF LAUNDRY     │──440
└──────────────────────────────────────────────────────┘
                           │
                           ▼
┌──────────────────────────────────────────────────────┐
│               DISPLAY DETERMINED TIME                  │──450
└──────────────────────────────────────────────────────┘
                           │
                           ▼
                    ┌─────────────┐
                    │     END     │
                    └─────────────┘
```

# FIG.5

START

MEASURE CURRENT OF MOTOR
OF ELECTRONIC DEVICE FOR
PREDETERMINED TIME PERIOD — 510

520
AVERAGE CURRENT
VALUE < FIRST THRESHOLD
AND DEGREE OF CHANGE IN
CURRENT < SECOND
THRESHOLD?

YES

NO

530
DETERMINE AS FIRST LEVEL

550
DETERMINE AS SECOND LEVEL

540
DETERMINE WEIGHT OF LAUNDRY
USING CURRENT VALUE AS INPUT
VALUE TO MACHINE LEARNING MODEL

560
DETERMINE WEIGHT OF LAUNDRY
USING CURRENT VALUE AND DEGREE
OF CHANGE IN CURRENT AS INPUT
VALUES TO MACHINE LEARNING MODEL

END

# FIG.6

# *FIG.7*

■ Only Single Feature Point Used
★ Single Feature Point And Multiple Feature Points Used

# FIG.8

## INTERNATIONAL SEARCH REPORT

| International application No. |
|---|
| **PCT/KR2024/017861** |

**A. CLASSIFICATION OF SUBJECT MATTER**

**D06F 34/18**(2020.01)i; **D06F 34/05**(2020.01)i; **D06F 34/28**(2020.01)i; **G06N 20/10**(2019.01)i; **D06F 34/04**(2020.01)i; **D06F 103/44**(2020.01)i; **D06F 103/04**(2020.01)i; **D06F 105/56**(2020.01)i; **D06F 105/58**(2020.01)i; **D06F 103/46**(2020.01)i

According to International Patent Classification (IPC) or to both national classification and IPC

**B. FIELDS SEARCHED**

Minimum documentation searched (classification system followed by classification symbols)

D06F 34/18(2020.01); D06F 33/02(2006.01); D06F 33/30(2020.01); D06F 33/48(2020.01); D06F 34/10(2020.01); D06F 37/30(2006.01); D06F 39/00(2006.01); D06F 58/20(2006.01); D06F 58/30(2020.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 세탁기(washing machine), 세탁물(laundry), 무게(weight), 시간(time), 전류값(current value), 모터(motor)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2019-0065149 A (LG ELECTRONICS INC.) 11 June 2019 (2019-06-11) See paragraphs [0102], [0143]-[0183], [0208] and [0239]-[0250]; and figures 10-11 and 15-17. | 1-15 |
| Y | KR 10-2020-0025555 A (LG ELECTRONICS INC.) 10 March 2020 (2020-03-10) See paragraphs [0067], [0083]-[0087] and [0105]-[0106]. | 1-15 |
| A | KR 10-2014-0018583 A (SAMSUNG ELECTRONICS CO., LTD.) 13 February 2014 (2014-02-13) See paragraphs [0063]-[0064]. | 1-15 |
| A | KR 10-2022-0103276 A (SAMSUNG ELECTRONICS CO., LTD.) 22 July 2022 (2022-07-22) See paragraphs [0138]-[0180]. | 1-15 |
| A | US 2021-0102329 A1 (LG ELECTRONICS INC.) 08 April 2021 (2021-04-08) See paragraphs [0177]-[0211]. | 1-15 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 February 2025** | **18 February 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/017861**

| Patent document cited in search report | | | Publication date (day/month/year) | Patent family member(s) | | | Publication date (day/month/year) |
|---|---|---|---|---|---|---|---|
| KR | 10-2019-0065149 | A | 11 June 2019 | CN | 109898310 | A | 18 June 2019 |
| | | | | CN | 109898310 | B | 28 September 2021 |
| | | | | EP | 3492648 | A1 | 05 June 2019 |
| | | | | EP | 3492648 | B1 | 09 June 2021 |
| | | | | TW | 201928145 | A | 16 July 2019 |
| | | | | TW | I697600 | B | 01 July 2020 |
| | | | | US | 10793996 | B2 | 06 October 2020 |
| | | | | US | 2019-0169783 | A1 | 06 June 2019 |
| | | | | WO | 2019-108005 | A1 | 06 June 2019 |
| KR | 10-2020-0025555 | A | 10 March 2020 | CN | 110924043 | A | 27 March 2020 |
| | | | | CN | 110924043 | B | 28 June 2022 |
| | | | | EP | 3617363 | A1 | 04 March 2020 |
| | | | | EP | 3617363 | B1 | 26 May 2021 |
| | | | | ES | 2878423 | T3 | 18 November 2021 |
| | | | | US | 11390977 | B2 | 19 July 2022 |
| | | | | US | 2020-0071872 | A1 | 05 March 2020 |
| | | | | WO | 2020-046082 | A2 | 05 March 2020 |
| | | | | WO | 2020-046082 | A3 | 23 April 2020 |
| KR | 10-2014-0018583 | A | 13 February 2014 | None | | | |
| KR | 10-2022-0103276 | A | 22 July 2022 | US | 2023-0295855 | A1 | 21 September 2023 |
| | | | | WO | 2022-154496 | A1 | 21 July 2022 |
| US | 2021-0102329 | A1 | 08 April 2021 | KR | 10-2021-0039723 | A | 12 April 2021 |
| | | | | US | 11466389 | B2 | 11 October 2022 |

Form PCT/ISA/210 (patent family annex) (July 2022)